# EUROPÄISCHE PATENTANMELDUNG

(11) **EP 3 640 624 A1**
(43) Veröffentlichungstag der Anmeldung: **22.04.2020**
(21) Anmeldenummer: 19214455.8
(22) Anmeldetag: 25.07.2017
(51) Int. Cl.: G01N 3/32, G01M 13/023, G01M 13/025

(54) **PRÜFVORRICHTUNG ZUR PRÜFUNG ODER ERPROBUNG EINES PRÜFGEGENSTANDS**

(30) Priorität: 03.08.2016 DE 102016009457
(62) Teilanmeldung aus: 17182909.6
(71) Anmelder: MAN Truck & Bus SE, 80995 München (DE)
(72) Erfinder: Hansky, Carl, 32549 Bad Oeynhausen (DE)
(74) Vertreter: v. Bezold & Partner Patentanwälte - PartG mbB

(57) **Zusammenfassung**

Die Erfindung betrifft eine Prüfvorrichtung (P) zur Prüfung oder Erprobung eines Prüfgegenstands (R), vorzugsweise eines Riementriebs (R), wobei die Prüfvorrichtung (P) eine Kurbelschwingenkonstruktion (K) und eine Getriebekonstruktion (Z1, Z2) umfasst und die Kurbelschwingenkonstruktion (K) zur Erzeugung einer Drehungleichförmigkeit und zur Übertragung der Drehungleichförmigkeit auf die Getriebekonstruktion (Z1, Z2) dient.

## Beschreibung

Die Erfindung betrifft eine Prüfvorrichtung zur Prüfung oder Erprobung eines Prüfgegenstands, insbesondere eines Riementriebs.

Zur Prüfung oder Erprobung von in Kraftfahrzeugen eingesetzten Riementrieben, z. B. Keil- und Keilrippenriemen, ist es wesentlich, dass die im Kraftfahrzeug auftretenden Betriebsbedingungen reproduzierbar und realitätsnah nachgebildet werden können. Eine wesentliche Schwierigkeit besteht hierbei darin, Drehungleichförmigkeiten reproduzierbar und realitätsnah nachzubilden. Ein Einzylinder-Viertaktmotor z. B. benötigt zwei Kurbelwellenumdrehungen, um ein Arbeitsspiel zu durchlaufen. Dies bedeutet, dass alle 720 ° Kurbelwinkel gezündet und die Kurbelwelle beschleunigt wird. Die dadurch entstehenden Schwingungen, insbesondere Torsionsschwingungen, werden als Hauptmotorordnung bezeichnet und haben Drehungleichförmigkeiten zur Folge. Die Ordnungszahl von selbiger hängt von den Ereignissen pro Kurbelwellenumdrehung ab. Die Hauptmotorordnung bei z. B. einem Einzylinder-Viertaktmotor ist die 0,5.

Aus der Praxis ist bekannt, Drehungleichförmigkeiten durch sogenannte vollvariable, hochdynamische Elektromotoren zu erzeugen. Derartige Elektromotoren sind allerdings relativ teuer.

Eine Aufgabe der Erfindung ist es, eine Prüfvorrichtung zur Prüfung oder Erprobung eines Prüfgegenstands, z. B. eines Riementriebs, zu schaffen, die relativ kostengünstig ist und vorzugsweise darüber hinaus unterschiedliche Drehungleichförmigkeiten erzeugen kann.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Prüfvorrichtung, insbesondere einen Prüfstand, zur Prüfung oder Erprobung eines Prüfgegenstands, insbesondere eines Riementriebs.

Die Prüfvorrichtung zeichnet sich insbesondere dadurch aus, dass sie eine Kurbelschwingenkonstruktion und eine Getriebekonstruktion aufweist. Die Kurbelschwingenkonstruktion dient insbesondere zur Erzeugung einer Drehungleichförmigkeit und zur Übertragung der Drehungleichförmigkeit auf die Getriebekonstruktion.

Die Erfindung ermöglicht vorzugsweise, aus einer z. B. durch einen Elektromotor erzeugbaren gleichförmigen Drehbewegung unterschiedliche Drehungleichförmigkeiten zu generieren und dadurch zweckmäßig unterschiedliche Motorordnungen abzubilden.

Hieraus ergibt sich z. B. einer oder mehrere der folgenden Vorteile:
- Abbildung verschiedener Motorordnungen
- dauerfest
- kostengünstig

Die Kurbelschwingenkonstruktion ist zweckmäßig abtriebseitig an die Getriebekonstruktion gekoppelt.

Die Getriebekonstruktion umfasst vorzugsweise zumindest zwei miteinander in Eingriff stehende Verzahnungselemente, z. B. zumindest zwei Zahnradstrukturen.

Die Getriebekonstruktion kann z. B. eine Übersetzungsverstelleinrichtung aufweisen, um unterschiedliche Übersetzungen zu realisieren, so dass unterschiedliche Drehungleichförmigkeiten für den Prüfgegenstand erzeugbar sind.

Die Prüfvorrichtung umfasst vorzugsweise einen Elektromotor zum Antrieb der Kurbelschwingenkonstruktion, wobei der Elektromotor vorzugsweise eine gleichförmige Drehbewegung auf die Kurbelschwingenkonstruktion aufbringt.

Die Kurbelschwingenkonstruktion kann z. B. zumindest drei Kurbelarme umfassen.

Die zumindest drei Kurbelarme können über vorzugsweise zumindest zwei Drehachsen aneinander gekoppelt sein, die sich z. B. im Wesentlichen parallel zueinander erstrecken.

Die Prüfvorrichtung kann z. B. eine Einstellkonstruktion (vorzugsweise eine Langlochkonstruktion oder ein mehrere Löcher aufweisendes Lochbild) aufweisen, um unterschiedliche Amplituden der durch die Kurbelschwingenkonstruktion generierten Drehungleichförmigkeit zu erzeugen.

Es ist möglich, dass ein erster Kurbelarm über eine erste Drehachse und ein zweiter Kurbelarm über eine zweite Drehachse an ein z. B. antriebseitiges Verzahnungselement der Getriebekonstruktion gekoppelt sind, vorzugsweise beabstandet voneinander und somit mit einer Exzentrizität.

Die erste Drehachse und die zweite Drehachse können sich z. B. im Wesentlichen parallel oder schräg zueinander erstrecken.

Der erste Kurbelarm und/oder der zweite Kurbelarm können über eine Einstellkonstruktion, z. B. eine Langlochkonstruktion oder ein mehrere Löcher aufweisendes Lochbild, an das vorzugsweise antriebseitige Verzahnungselement gekoppelt sein, um die Exzentrizität verändern zu können, insbesondere zwischen der ersten Drehachse und der zweiten Drehachse. Dadurch können z. B. unterschiedliche Amplituden der durch die Kurbelschwingenkonstruktion generierten Drehungleichförmigkeit erzeugt werden.

Es ist möglich, dass ein dritter Kurbelarm den ersten Kurbelarm mit dem zweiten Kurbelarm verbindet.

Die Getriebekonstruktion kann zweckmäßig abtriebseitig mit einer Welle verbunden sein, über die die Drehungleichförmigkeit auf den Prüfgegenstand übertragbar ist, vorzugsweise eine Welle mit Riemenscheibe zur Ankopplung eines Riementriebs.

Die Welle kann vorzugsweise als Welle mit Freilauf ausgeführt sein, so dass z. B. die Drehungleichförmigkeit nur in eine Richtung auf den Prüfgegenstand übertragbar ist.

Das Merkmal "Verzahnungselement" kann im Rahmen der Erfindung z. B. ein Zahnrad umfassen, aber auch z. B. ein Element mit einer Verzahnung auf nur einem Kreisbogen und/oder andere Verzahnungsstrukturen.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Vorderansicht einer Prüfvorrichtung gemäß einer Ausführungsform der Erfindung, und
- Figur 2: zeigt eine Seitenansicht der Prüfvorrichtung der Figur 1.

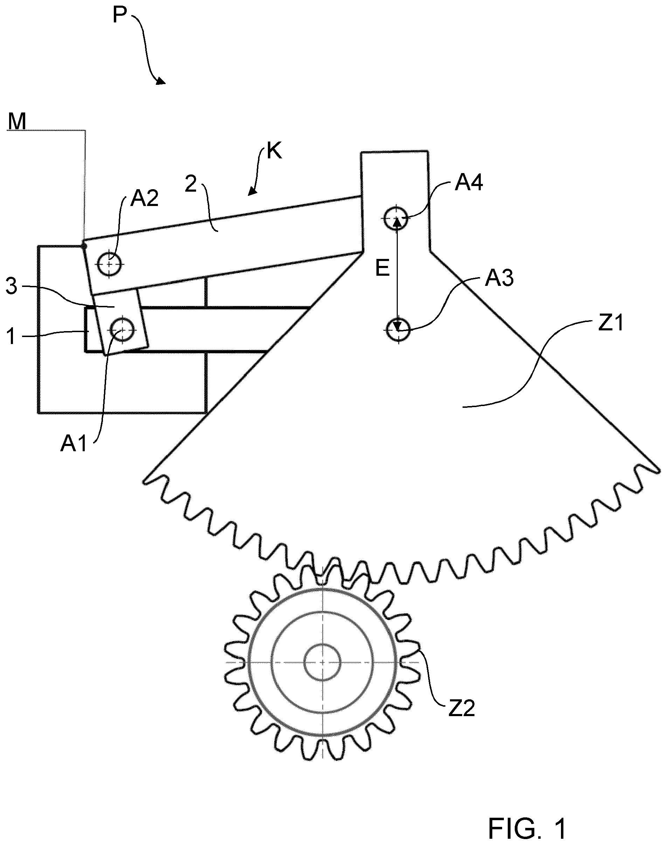

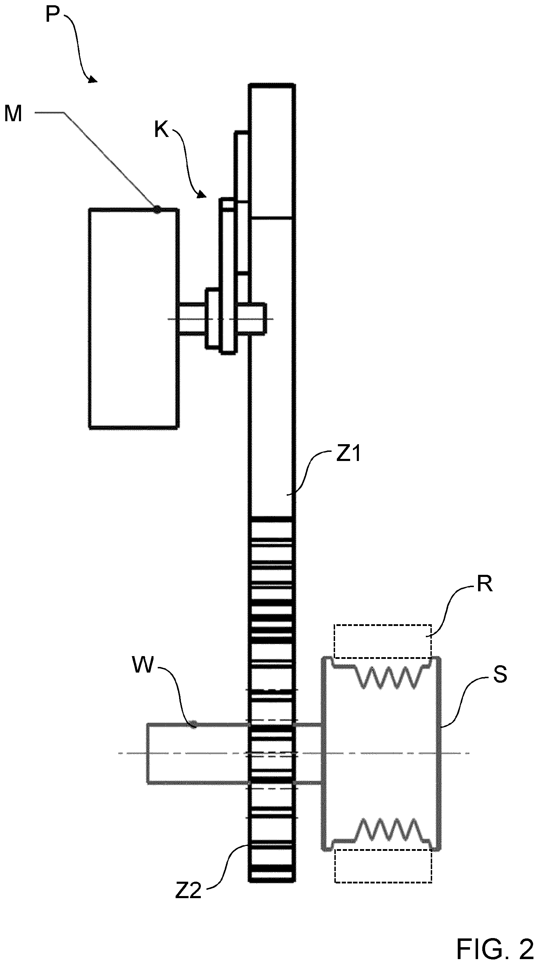

Figur 1 zeigt eine Prüfvorrichtung P zur Prüfung oder Erprobung eines Prüfgegenstands R, wobei Figur 2 eine zugehörige Seitenansicht der in Figur 1 gezeigten Prüfvorrichtung P zeigt. Die Prüfvorrichtung P wird nachfolgend unter gemeinsamer Bezugnahme auf die Figuren 1 und 2 beschrieben.

Im Betrieb von Verbrennungsmotoren entstehen durch die Zündung des Kraftstoffs charakteristische (Torsions-) Schwingungen, die als (Haupt-) Motorordnung bezeichnet werden und Drehungleichförmigkeiten zur Folge haben. Die Prüfvorrichtung P dient zweckmäßig zur Abbildung/Simulierung dieser (Haupt-) Motorordnung.

Die Prüfvorrichtung P umfasst eine Kurbelschwingenkonstruktion K und eine Getriebekonstruktion Z1, Z2. Die Kurbelschwingenkonstruktion K dient zur Erzeugung einer Drehungleichförmigkeit und zur Übertragung der Drehungleichförmigkeit auf die Getriebekonstruktion Z1, Z2.

Die Kurbelschwingenkonstruktion K ist abtriebseitig an die Getriebekonstruktion Z1, Z2 gekoppelt ist, wobei die Getriebekonstruktion Z1, Z2 zumindest zwei miteinander in Eingriff stehende Verzahnungselemente Z1, Z2 aufweist, nämlich ein antriebseitiges Verzahnungselement Z1 und ein abtriebseitiges Verzahnungselement Z2.

Die Getriebekonstruktion Z1, Z2 kann eine Übersetzungsverstelleinrichtung aufweisen, mittels der unterschiedliche Übersetzungen darstellbar sind, so dass unterschiedliche Drehungleichförmigkeiten für den Prüfgegenstand R erzeugbar sind.

Durch die Übersetzung (i) der Verzahnungselemente Z1, Z2 kann die Art der Motorordnung eingestellt werden (also z. B. ob 0,5. 1., 2., usw.).

Der Antrieb der Prüfvorrichtung P, insbesondere der Kurbelschwingenkonstruktion K, erfolgt über einen Elektromotor E, der eine im Wesentlichen gleichförmige Drehbewegung auf die Kurbelschwingenkonstruktion K aufbringt.

Die Kurbelschwingenkonstruktion K umfasst drei Kurbelarme 1, 2 und 3. Die drei Kurbelarme 1, 2 und 3 sind über zwei im Wesentlichen parallel verlaufende Drehachsen A1 und A2 aneinander gekoppelt.

Ein erster Kurbelarm 1 ist über eine erste Drehachse A3 an das Verzahnungselement Z1 gekoppelt und ein zweiter Kurbelarm 2 ist über eine zweite Drehachse A4 ebenfalls an das Verzahnungselement Z1 gekoppelt. Der erste Kurbelarm 1 und der zweite Kurbelarm 2 sind allerdings beabstandet voneinander und somit mit einer Exzentrizität E an das Verzahnungselement Z1 gekoppelt. Die erste Drehachse A3 und die zweite Drehachse A3 können sich parallel oder schräg zueinander erstrecken.

Die Prüfvorrichtung P kann eine Einstellkonstruktion umfassen, mittels der unterschiedliche Amplituden erzeugbar sind. Die Amplituden beziehen sich auf die durch die Kurbelschwingenkonstruktion K generierte Drehungleichförmigkeit.

Die Einstellkonstruktion kann z. B. realisiert werden, indem der erste Kurbelarm 1 und/oder der zweite Kurbelarm 2 über eine Langlochkonstruktion oder ein mehrere Löcher umfassendes Lochbild an das Verzahnungselement Z1 gekoppelt wird, wodurch die Exzentrizität E verstellbar ist, insbesondere vergrößert und verkleinert werden kann.

Ein dritter Kurbelarm 3 verbindet den ersten Kurbelarm 1 mit dem zweiten Kurbelarm 2.

Das Verzahnungselement Z2 ist mit einer Welle W verbunden, über die die Drehungleichförmigkeit auf den Prüfgegenstand R übertragbar ist. Die Welle W ist insbesondere eine Welle W mit Riemenscheibe S zur Ankopplung des Riementriebs R.

Die Welle W ist vorzugsweise als Welle W mit Freilauf ausgeführt, so dass vorzugsweise die Drehungleichförmigkeit in nur eine Richtung auf den Prüfgegenstand R übertragbar ist.

Die Erfindung umfasst ferner folgende Gegenstände:
1. Prüfvorrichtung (P) zur Prüfung oder Erprobung eines Prüfgegenstands (R), vorzugsweise eines Riementriebs (R), dadurch gekennzeichnet, dass die Prüfvorrichtung (P) eine Kurbelschwingenkonstruktion (K) und eine Getriebekonstruktion (Z1, Z2) umfasst und die Kurbelschwingenkonstruktion (K) zur Erzeugung einer Drehungleichförmigkeit und zur Übertragung der Drehungleichförmigkeit auf die Getriebekonstruktion (Z1, Z2) dient.
2. Prüfvorrichtung (P) nach Punkt 1, dadurch gekennzeichnet, dass die Kurbelschwingenkonstruktion (K) abtriebseitig an die Getriebekonstruktion (Z1, Z2) gekoppelt ist und die Getriebekonstruktion (Z1, Z2) zumindest zwei miteinander in Eingriff stehende Verzahnungselemente (Z1, Z2) umfasst.
3. Prüfvorrichtung (P) nach Punkt 1 oder 2, dadurch gekennzeichnet, dass die Getriebekonstruktion (Z1, Z2) eine Übersetzungsverstelleinrichtung umfasst, um unterschiedliche Übersetzungen zu realisieren, so dass unterschiedliche Drehungleichförmigkeiten für den Prüfgegenstand (R) erzeugbar sind.
4. Prüfvorrichtung (P) nach einem der vorhergehenden Punkte, dadurch gekennzeichnet, dass die Prüfvorrichtung (P) einen Elektromotor (M) zum Antrieb der Kurbelschwingenkonstruktion (K) umfasst, wobei vorzugsweise der Elektromotor (M) eine gleichförmige Drehbewegung auf die Kurbelschwingenkonstruktion (K) aufbringt.
5. Prüfvorrichtung (P) nach einem der vorhergehenden Punkte, dadurch gekennzeichnet, dass die Kurbelschwingenkonstruktion (K) zumindest drei Kurbelarme (1, 2, 3) umfasst.
6. Prüfvorrichtung (P) nach Punkt 5, dadurch gekennzeichnet, dass die drei Kurbelarme (1, 2, 3) über zumindest zwei Drehachsen (A1, A2) aneinander gekoppelt sind, die sich vorzugsweise parallel zueinander erstrecken.
7. Prüfvorrichtung (P) nach einem der vorhergehenden Punkte, dadurch gekennzeichnet, dass die Prüfvorrichtung (P) eine Einstellkonstruktion umfasst, um unterschiedliche Amplituden der durch die Kurbelschwingenkonstruktion (K) generierten Drehungleichförmigkeit zu erzeugen.
8. Prüfvorrichtung (P) nach einem der vorhergehenden Punkte, dadurch gekennzeichnet, dass ein erster Kurbelarm (1) über eine erste Drehachse (A3) und ein zweiter Kurbelarm (2) über eine zweite Drehachse (A4) an ein antriebseitiges Verzahnungselement (Z1) der Getriebekonstruktion (Z1, Z2) gekoppelt sind und zwar beabstandet voneinander und somit mit einer Exzentrizität (E).
9. Prüfvorrichtung (P) nach Punkt 8, dadurch gekennzeichnet, dass die erste Drehachse (A3) und die zweite Drehachse (A4) sich parallel oder schräg zueinander erstrecken.
10. Prüfvorrichtung (P) nach Punkt 8 oder 9, dadurch gekennzeichnet, dass der erste Kurbelarm (1) und/oder der zweite Kurbelarm (2) über eine Einstellkonstruktion, vorzugsweise eine Langlochkonstruktion oder ein mehrere Löcher aufweisendes Lochbild, an das antriebseitige Verzahnungselement (Z1) der Getriebekonstruktion (Z1, Z2) gekoppelt ist, um eine Exzentrizität (E) verstellen zu können, so dass unterschiedliche Amplituden der durch die Kurbelschwingenkonstruktion (K) generierten Drehungleichförmigkeit erzeugbar sind.
11. Prüfvorrichtung (P) nach einem der Punkte 8 bis 10, dadurch gekennzeichnet, dass ein dritter Kurbelarm (3) den ersten Kurbelarm (1) mit dem zweiten Kurbelarm (2) verbindet.
12. Prüfvorrichtung (P) nach einem der vorhergehenden Punkte, dadurch gekennzeichnet, dass die Getriebekonstruktion (Z1, Z2) mit einer Welle (W) verbunden ist, über die die Drehungleichförmigkeit auf den Prüfgegenstand (R) übertragbar ist, vorzugsweise eine Welle (W) mit Riemenscheibe (S) zur Ankopplung eines Riementriebs (R).
13. Prüfvorrichtung (P) nach Punkt 12, dadurch gekennzeichnet, dass die Welle (W) als Welle (W) mit Freilauf ausgeführt ist, so dass vorzugsweise die Drehungleichförmigkeit in nur einer Richtung auf den Prüfgegenstand (R) übertragbar ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Kurbelarm
- 2: Kurbelarm
- 3: Kurbelarm
- A1: Drehachse
- A2: Drehachse
- A3: Drehachse
- A4: Drehachse
- E: Exzentrizität
- M: Elektromotor
- K: Kurbelschwingenkonstruktion
- P: Prüfvorrichtung
- R: Prüfgegenstand, insbesondere Riementrieb
- S: Riemenscheibe
- W: Welle
- Z1: Verzahnungselement
- Z2: Verzahnungselement

## Patentansprüche

1. Prüfvorrichtung (P) zur Prüfung oder Erprobung eines Prüfgegenstands (R), vorzugsweise eines Riementriebs (R), **dadurch gekennzeichnet, dass** die Prüfvorrichtung (P) eine Kurbelschwingenkonstruktion (K) und eine Getriebekonstruktion (Z1, Z2) umfasst und die Kurbelschwingenkonstruktion (K) zur Erzeugung einer Drehungleichförmigkeit und zur Übertragung der Drehungleichförmigkeit auf die Getriebekonstruktion (Z1, Z2) dient, wobei die Getriebekonstruktion (Z1, Z2) mit einer Welle (W) verbunden ist, über die die Drehungleichförmigkeit auf den Prüfgegenstand (R) übertragbar ist,
wobei die Getriebekonstruktion (Z1, Z2) eine Übersetzungsverstelleinrichtung umfasst, um unterschiedliche Übersetzungen zu realisieren, so dass unterschiedliche Drehungleichförmigkeiten für den Prüfgegenstand (R) erzeugbar sind, und/oder
wobei die Welle (W) als Welle (W) mit Freilauf ausgeführt ist, so dass vorzugsweise die Drehungleichförmigkeit in nur einer Richtung auf den Prüfgegenstand (R) übertragbar ist.

2. Prüfvorrichtung (P) nach Anspruch 1, **dadurch gekennzeichnet, dass** die Kurbelschwingenkonstruktion (K) abtriebseitig an die Getriebekonstruktion (Z1, Z2) gekoppelt ist und die Getriebekonstruktion (Z1, Z2) zumindest zwei miteinander in Eingriff stehende Verzahnungselemente (Z1, Z2) umfasst.

3. Prüfvorrichtung (P) nach einem der vorhergehenden Ansprüche, **dadurch gekennzeichnet, dass** die Prüfvorrichtung (P) einen Elektromotor (M) zum Antrieb der Kurbelschwingenkonstruktion (K) umfasst, wobei vorzugsweise der Elektromotor (M) eine gleichförmige Drehbewegung auf die Kurbelschwingenkonstruktion (K) aufbringt.

4. Prüfvorrichtung (P) nach einem der vorhergehenden Ansprüche, **dadurch gekennzeichnet, dass** die Kurbelschwingenkonstruktion (K) zumindest drei Kurbelarme (1, 2, 3) umfasst.

5. Prüfvorrichtung (P) nach Anspruch 4, **dadurch gekennzeichnet, dass** die drei Kurbelarme (1, 2, 3) über zumindest zwei Drehachsen (A1, A2) aneinander gekoppelt sind, die sich vorzugsweise parallel zueinander erstrecken.

6. Prüfvorrichtung (P) nach einem der vorhergehenden Ansprüche, **dadurch gekennzeichnet, dass** die Prüfvorrichtung (P) eine Einstellkonstruktion umfasst, um unterschiedliche Amplituden der durch die Kurbelschwingenkonstruktion (K) generierten Drehungleichförmigkeit zu erzeugen.

7. Prüfvorrichtung (P) nach einem der vorhergehenden Ansprüche, **dadurch gekennzeichnet, dass** ein erster Kurbelarm (1) über eine erste Drehachse (A3) und ein zweiter Kurbelarm (2) über eine zweite Drehachse (A4) an ein antriebseitiges Verzahnungselement (Z1) der Getriebekonstruktion (Z1, Z2) gekoppelt sind und zwar beabstandet voneinander und somit mit einer Exzentrizität (E).

8. Prüfvorrichtung (P) nach Anspruch 7, **dadurch gekennzeichnet, dass** die erste Drehachse (A3) und die zweite Drehachse (A4) sich parallel oder schräg zueinander erstrecken.

9. Prüfvorrichtung (P) nach Anspruch 7 oder 8, **dadurch gekennzeichnet, dass** der erste Kurbelarm (1) und/oder der zweite Kurbelarm (2) über eine Einstellkonstruktion, vorzugsweise eine Langlochkonstruktion oder ein mehrere Löcher aufweisendes Lochbild, an das antriebseitige Verzahnungselement (Z1) der Getriebekonstruktion (Z1, Z2) gekoppelt ist, um eine Exzentrizität (E) verstellen zu können, so dass unterschiedliche Amplituden der durch die Kurbelschwingenkonstruktion (K) generierten Drehungleichförmigkeit erzeugbar sind.

10. Prüfvorrichtung (P) nach einem der Ansprüche 7 bis 9, **dadurch gekennzeichnet, dass** ein dritter Kurbelarm (3) den ersten Kurbelarm (1) mit dem zweiten Kurbelarm (2) verbindet.

11. Prüfvorrichtung (P) nach einem der vorhergehenden Ansprüche, **dadurch gekennzeichnet, dass** die Getriebekonstruktion (Z1, Z2) mit einer Welle (W) mit Riemenscheibe (S) zur Ankopplung eines Riementriebs (R) verbunden ist, über die die Drehungleichförmigkeit auf den Prüfgegenstand (R) übertragbar ist.
